# EUROPEAN PATENT SPECIFICATION

(11) **EP 0 635 203 B1**
(45) Date of publication and mention of the grant of the patent: **09.02.2000**
(21) Application number: 94202042.1
(22) Date of filing: 14.07.1994
(51) Int. Cl.: A01J 7/00, A01K 1/12

(54) **A construction for automatically milking animals**
Vorrichtung zum automatischen Melken von Tieren
Dispositif de traite automatique d'animaux

(30) Priority: 19.07.1993 NL 9301260
(43) Date of publication of application: 25.01.1995
(60) Divisional application: 99202503.1
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- DE-A- 3 702 465
- FR-A- 2 298 943
- FR-A- 2 561 866

## Description

The present invention relates to a construction according to the preamble of claim 1.

Such a construction is known from DE-A-37 02 465. In this construction, the animals are allowed to move about freely, while the animals can go to a milking parlour which comprises milking boxes and a robot for automatically milking an animal in one of said milking boxes. Each time when an animal is to be milked, the animal itself has to walk to one of the milking boxes of the milking parlour. This can have the disadvantage that when many animals walk to the milking parlour the animals crowd round the milking parlour. Furthermore it has been found that not all the animals go to the milking parlour at their own free will. This has the disadvantage that the farmer must lead these animals to the milking parlour. Especially in an automatized system with a milking robot the manual labour must be minimized. This method of milking may cause delay. Finally, these milking boxes require extra space and the costly facility of doors for the animals to enter and exit the milking box.

It is an objective of the invention to obviate these drawbacks. Therefore, the construction according to the invention comprises a shed in which the milking robot and the positioning construction are transportably arranged within the shed in such a manner that an animal can be milked on the spot in or near a compartment designed as a resting box where said animal is staying, while said positioning construction obstructs rearward and sideward movements of the animal. This offers the advantage of a greater certainty that an animal will be milked at a particular time, because the milking robot moves to the relevant animal and does not require the expensive and spacious facility of a milking box.

According to another feature of the invention, the computer system decides which cow is to be milked. According to still another feature of the invention, the construction comprises a number of compartments designed as resting boxes which are also suitable to serve as milking parlours and/or feeding places.

According to another feature of the invention, the construction comprises a transmitter and a receiver, by means of which the presence of a cow in a resting box can be detected. Whether an animal is present in a resting box can be recorded by means of the computer system and transponders provided on the animals' necks, according to a further feature of the invention. With the computer system it is also feasible to identify which animal is in which resting box. According to yet another feature of the invention, the computer system is also capable of determining whether a particular animal, compared to other animals, has not been milked during a longer time period than the period in which other animals have been milked. For example, if it is found that a particular cow has not been milked for the last eight hours, the computer system causes the milking robot to move automatically to this cow and to milk her.

To allure the animals to the resting boxes, the construction according to the invention comprises a concentrates dispensing device, through which the animals are individually given concentrates, while there are also provided signalling means, through which the attention of an animal is drawn to the supply of concentrates.

To elucidate the invention, an exemplary embodiment of the invention will now be further explained with reference to the accompanying drawings, in which:
Figure 1 is a plan view of a shed comprising two rows of resting boxes;
Figure 2 is a cross-section of the shed taken along the line II-II in Figure 1, where each row of resting boxes is provided with a milking robot and a concentrates dispensing system;
Figure 3 is a cross-sectional view of a resting box and a milking robot taken along the line III-III in Figure 1;
Figure 4 is a rear view of the resting box, as indicated by the arrow IV in Figure 3;
Figure 5 shows a plan view of a plurality of resting boxes, as indicated by the arrow V in Figure 3;
Figure 6 is a side view of a cross conveyor for the removal of manure, as indicated by the arrow VI in Figure 1;
Figure 7 is a plan view of the cross conveyor for the removal of manure, as indicated by the arrow VII in Figure 6 and
Figure 8 shows enlarged a longitudinal conveyor for the removal of manure in the manure channel of Figure 1.

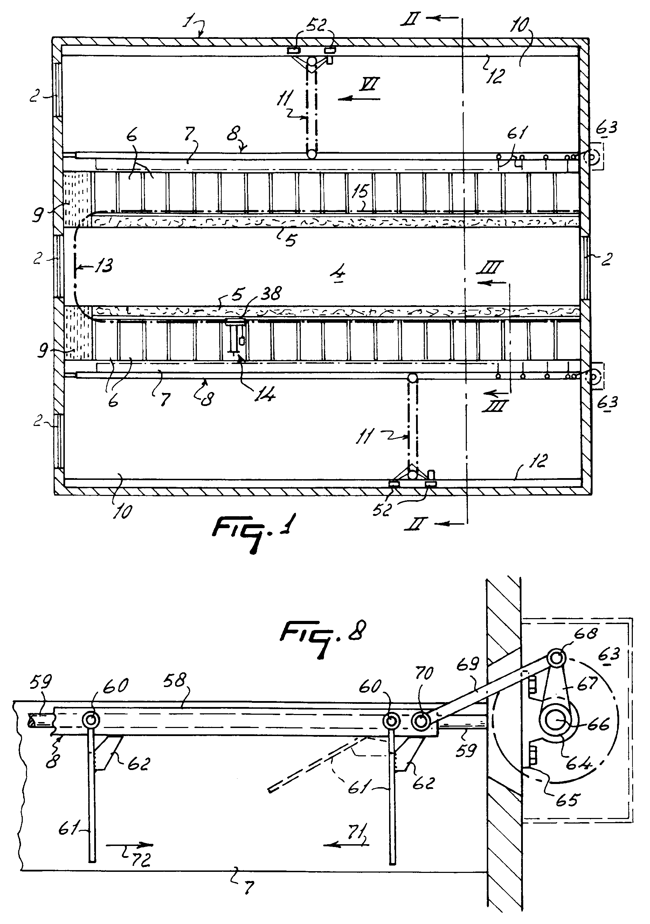

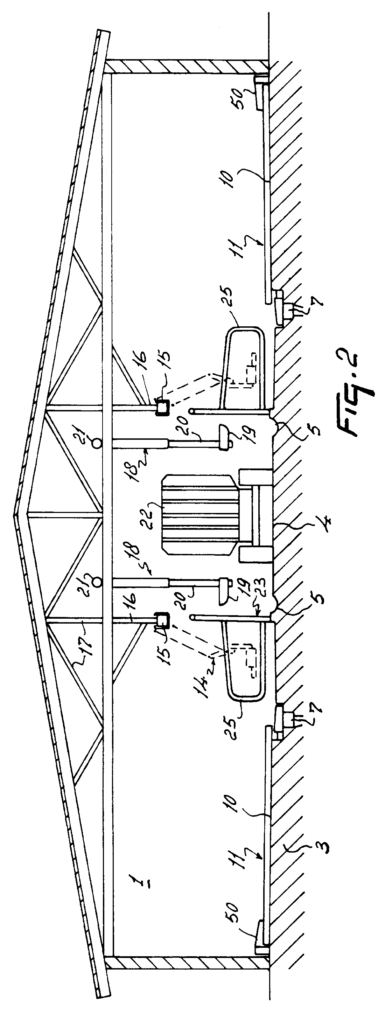

In Figure 1, the plan view shows a shed 1 provided with doors 2 and a floor 3. A feeding passage 4 with, on either side, a long feed trough 5 (Figure 2) extending over the full shed length is centrally arranged in the cow shed 1. On either side of the feeding passage 4 there is provided a row of resting boxes which may be used as places for the animals to rest, to be milked and to be fed. As is shown in Figures 1 and 2, at the rear side of each row of resting boxes 6 there is provided a manure channel 7 equipped with a conveyor 8 capable of removing unidirectionally the manure present in the manure channel 7. On one end of each row of resting boxes 6 is a receptacle 9 to store the manure removed by the longitudinal conveyor 8. The receptacle 9 has a connection with a manure storage pit - not shown. Behind each row of resting boxes there is also a loafing passage 10, on which the animals are allowed to move about freely. The floor 3 of the loafing passages 10 and the resting boxes 6 are inclined slightly downward in the direction of the manure channels 7. The angle of inclination of the floor 3 is preferably 1 to 2°. The floor is treated with a coating which prevents ammonia or ammonia-containing substances from penetrating into the floor 3.

Arranged transversely to each loafing passage 10, a cross conveyor 11 is to remove any manure and/or urine from the loafing passage 10 into the manure channel 7. The cross conveyor 11 is capable of travelling to and fro in the longitudinal direction of the shed 1 on a rail 12 installed near either outer wall of the shed 1.

In the shed 1, there is also provided a U-shaped robot line 13, along which a milking robot 14 is movable. The legs of the U-shaped robot line 13 extend along the front side of the resting boxes 6. As is indicated in Figure 2, the robot line 13 comprises a beam 15 fastened to the roof truss 17 of the shed 1 by means of supports 16. The beam 15 is suspended about two metres from the floor 3. Furthermore, near the front of each resting box 6, there is provided a concentrates feeding system 18, through which the animals having taken their places in resting boxes 6 can be individually given concentrates, such as pellets. The concentrates feeding system 18 comprises for each resting box a feed trough 19 arranged on a "periscope-like" telescoping tube 20. The telescoping tubes 20 are attached to the roof truss 17 and connected to a supply line 21 for the supply of concentrated-feed pellets from a storage room - not shown. The "periscope-like" telescoping tube 20 is capable of moving each feed trough vertically and of pivoting each feed trough 19 on a vertical shaft. For depositing roughage in the long feed troughs 5, e.g. by means of a silage waggon 22, the feed troughs may be temporarily raised, so as that not to interfere with the supply of roughage into the long feed troughs 5.

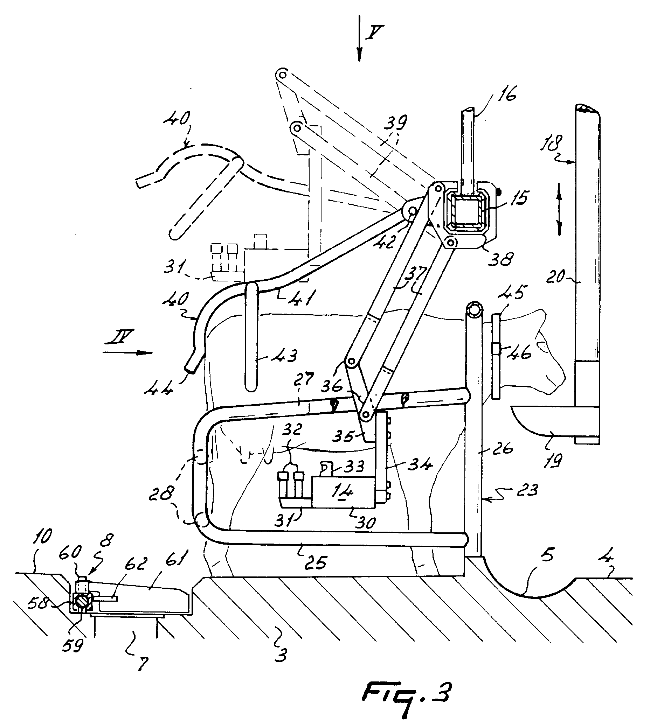

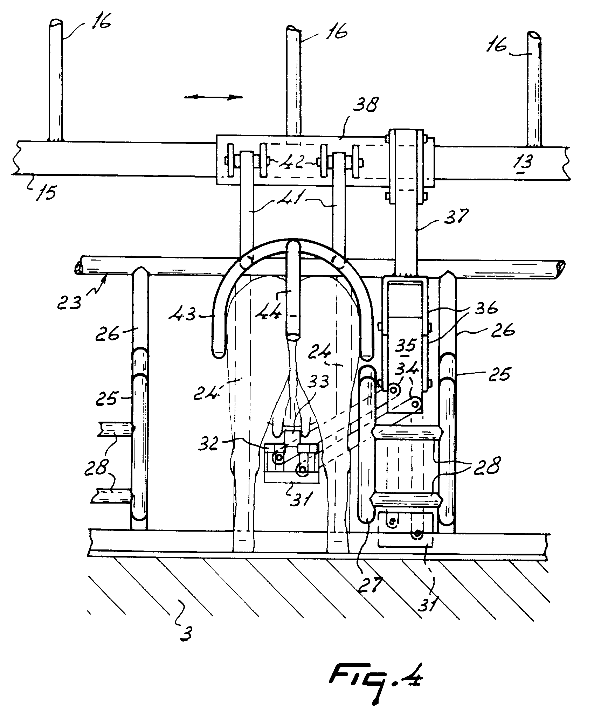

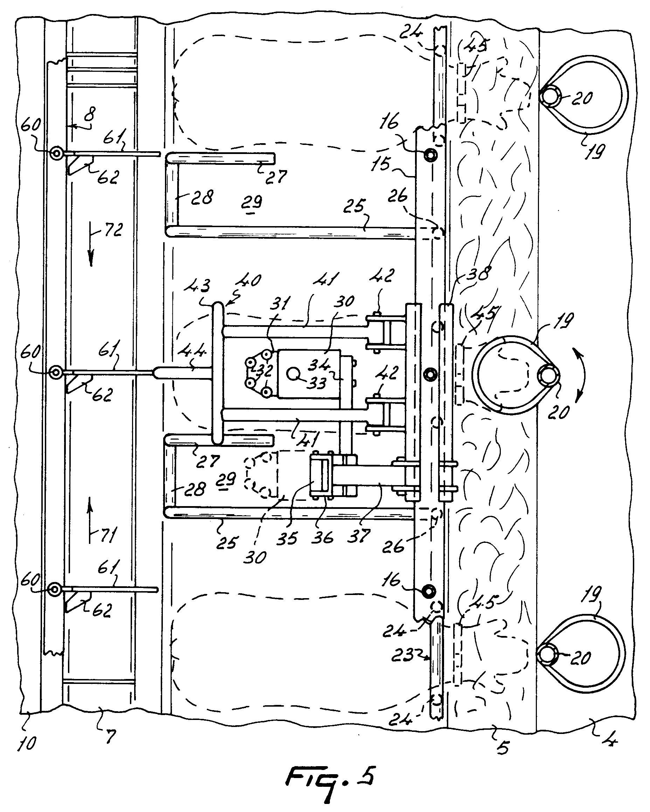

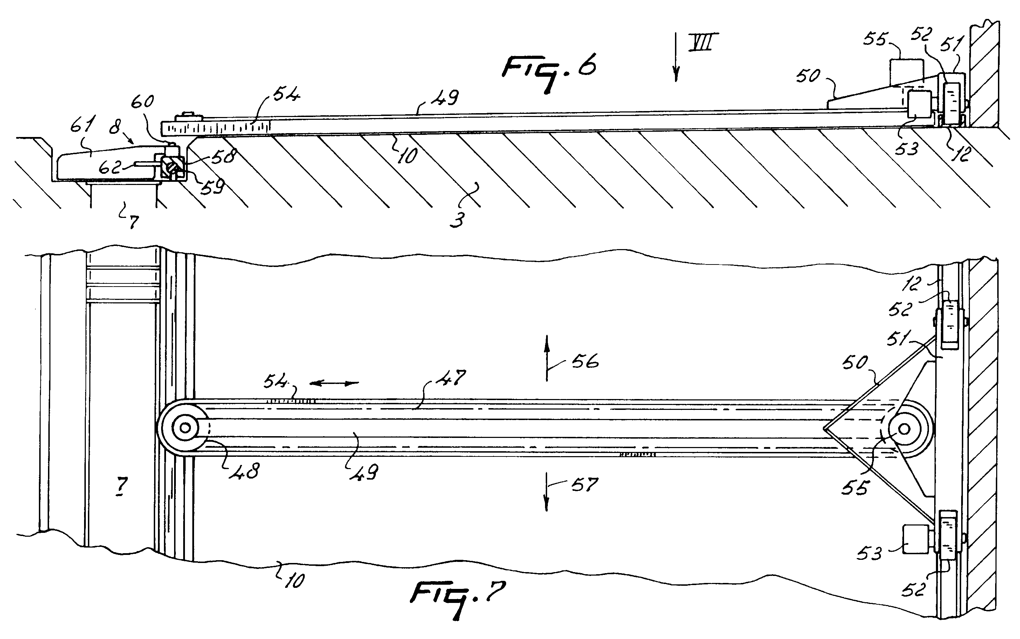

Figures 3 - 5 show in detail in which way the milking robot 14 milks the cows in the resting box(es) 6. Each resting box 6 comprises a rectangular tubular frame 23, which constitutes the front of a resting box 6. Two vertical tubes 24 are arranged at a certain distance from each other near the centre of the tubular frame 23 in such a way that the interspace allows the head of an animal to reach a long feed trough 5 and a feed trough 19. Each resting box 6 also comprises two U-shaped side walls 25 which connect with the posts 26 of the tubular frame 23. Near the end, a second U-shaped frame 27 mounted on one of the U-shaped side walls 25 of a resting box 6 by means of two horizontal connecting rods 28, is disposed at a certain distance from and parallel to the U-shaped side wall 25. The second U-shaped frame 27 extends from the rear side of the resting box 6 to approximately halfway the resting box 6. In the space 29 (Figure 5) thus created by the parallel frames 25 and 27, the milking robot 14 is allowed to swivel in a vertical plane, without causing there any trouble to an animal which has taken its place in a relevant resting box 6. As is reflected in Figure 3, the milking robot 14 comprises a robot arm 30 having on its end a robot head 31 equipped with teat cups 32. In addition, the robot head 31 comprises a detection sensor 33 which enables to determine e.g. the positions of the teats of an animal to be milked. The robot head 31 is capable of being moved in a horizontal plane by means of a first quadrangular hinge mechanism 34, one end of which is connected to the robot arm 30 and the other end to a supporting plate 35. Furthermore, the supporting plate 35 is provided with two lugs 36 connected with the arms of a second quadrangular hinge mechanism 37. The other end of the second quadrangular hinge mechanism 37 is connected with a U-shaped sleeve 38 slidable on the beam 15 of the robot line 13. The milking robot 14 can swivel in a vertical plane by means of the second quadrangular hinge mechanism 37, so that in the event that the milking robot 14 is moved along the beam 14 to a certain resting box 6, the milking robot 14 is capable of being swivelled upwards by means of the quadrangular hinge mechanism 37, as is indicated by dashed lines 39 in Figure 3. When the relevant resting box 6 has been reached, the milking robot 14 can be swivelled in the space 29 of a milking box 6 by means of the second quadrangular hinge mechanism 37, whereupon the robot head 31 can be swivelled, by means of the first quadrangular hinge mechanism, to a position under the udder of an animal to be milked. The positions of the teats are determined by means of the detection sensor 33, whereupon the teat cups are automatically connected to the teats of the animal concerned.

On the sleeve 38, next to the milking robot 14, there is provided a positioning construction 40, by means of which an animal in a resting box 6 is restricted in its freedom of motion both in rearward and in sideward direction. The positioning construction 40 comprises two arms 41 which are disposed on the sleeve 38, rotatably mounted on a horizontal shaft 42. The two arms 41 are at a certain distance from each other and their ends are interconnected by an arc-shaped brace 43 which, in a rear view of a resting box 6, extends transversely to the longitudinal direction of the resting box 6. The arc-shaped brace 43 has a diameter which roughly corresponds with the width of a full-grown cow. Near the centre of the arc-shaped brace 43, a bent tube 44 extending obliquely rearwards and downwards in the longitudinal direction of the resting box 6 is provided and, when the cow has been positioned, is in contact with the rear part of the animal. The brace 43 and the tube 44 thus constitute a tripod positioning construction which is pivotable in a vertical plane on the horizontal shafts 42. During the milking robot 14 motion along the robot line 13, both the milking robot 14 and the positioning construction 40 are swung up.

The operation of the above-described construction will be explained below.

Every animal present in the shed 1 is provided with a collar 45 bearing a transmitter 46, by means of which transmitter the identity of the relevant cow can be transmitted to a computer - not shown - provided with a cow recognition system. Through the computer it is recorded which animal has been milked at a certain time by means of the milking robot 14 and how much time has lapsed since then. On the basis of the time elapsed since a milking, the computer can determine which animal in the herd was milked the longest time ago. If the relevant animal is in or near a resting box 6, it will be attempted to milk the animal by means of the milking robot 14. In the event that the relevant animal is in a resting box 6, the milking robot 14 is moved along the robot line 13 to the respective resting box 6, and the animal is limited in its freedom of motion in the resting box by means of the tripod positioning construction 40. At the same time or subsequently, the feed trough 19 arranged near the front of the relevant resting box 6 is turned to the animal (Figure 5) and the animal is given a predetermined amount of concentrated feed by the concentrates dispensing system. Subsequently, the milking robot 14 is swung down from the raised position and the milking robot head 31 is moved to underneath the animal, whereupon the teat cups 32 can be connected to the teats. Subsequently, automatic milking can start, while the teat cups are disconnected on completion of the milking and the milking robot 14 is again put into the raised position then. Subsequently, the positioning construction 40 is also swung up and the feed trough 19 is turned away from the animal. After this, the milking robot 14 can be moved along the robot line to an other animal to be milked.

If the animal is not in a position appropriate for milking in a resting box 6 - which means that the animal, for instance, lies in the resting box 6 or is in the vicinity of the resting box 6 -, then the feed trough 19 is put into position by means of the concentrates dispensing system 18 and concentrated feed is thrown into the feed trough 19. Because the throwing of concentrates into the feed trough 19 is accompanied by noise, this will usually be noticed by the animal, whereupon the animal will get up and go to the feed trough 19 where the animal can subsequently be milked. If an animal remains lying in the resting box 6 after concentrated feed has been supplied through the concentrates dispensing system 18, the animal can be stimulated to get up by touching the animal with the positioning construction 40.

In the Figures 6 and 7, the cross conveyor 11 of Figure 1 is shown enlarged and more detailed. The cross conveyor 11 covers the full width of the loafing area in the cow-shed 1, while one end of the cross conveyor 11 projects above the manure channel 7. The cross conveyor 11 comprises a looped chain 47 which is mounted on gearwheels 48 at the two ends of the cross conveyor 11 (Figure 7). The two gearwheels 48 are interconnected by an intermediate beam 49, of which one end is connected with a V-shaped frame 50. The two legs of the V-shaped frame 50 are interconnected by a horizontal U-shaped strip 51, whose both ends are provided with roller pair members 52, by means of which the cross conveyor 11 can be moved to and fro along the rail 12 in the longitudinal direction of the shed 1. For this purpose, one roller member 52 is driven by a motor 53, which is an electric motor in the exemplary embodiment of the invention. The chain 47 has on its bottom side bristles 54 which bear on the floor 3 of the loafing area in the shed 1. Through the gearwheel 48 situated near the V-shaped frame 50, the chain 47 is driven by a second motor 55 which is also in the form of an electric motor.

If the cross conveyor 11 is moved in the direction indicated by arrow 56 in Figure 7, the second electric motor 55 drives the chain 47 counter-clockwise, so that the manure and/or other dirt present on the floor 3 of the loafing area in the shed 1 is carried off in the direction of the manure channel 7. When the cross conveyor has reached the end of the shed 1, the electric motor 53 is automatically changed over, so that the cross conveyor 11 moves in the opposite direction, as is indicated by arrow 57 in Figure 7. The first electric motor 53 is simultaneously changed over, so that the chain 47, too, is turned clockwise instead of counter-clock-wise, so that also in the event that the cross conveyor 11 is moved in the direction of arrow 57 the manure is carried into the manure channel 7.

In Figure 8, the longitudinal conveyor 8 of Figure 1 is shown enlarged and more detailed. The longitudinal conveyor 8 comprises a U-shaped frame beam 58 slidably mounted on a rail 59 which is placed on the bottom of the U-shaped manure channel 7 and extends along a side wall of this manure channel 7. On the U-shaped frame beam 58 and at a certain mutual distance there are provided two upright shafts 60 with bearing-mounted rotatable carriers 61 around them. On one side, the carriers 61 are provided with a stop 62 which can bear on the side of the U-shaped frame beam 58. In the exemplary embodiment of the invention, the carriers are made of steel and on their bottom side they are provided with a rubber strip bearing on the bottom of the manure channel 7. It will be obvious that the carriers 61 may also be completely made of plastic or metal or any other type of material.

Arranged near an end of the U-shaped beam 58 there is an eccentric drive 63, by means of which the U-shaped frame beam 58 can be moved to and fro on the rail 59. The eccentric drive 63 comprises an electric motor 64 attached to the outer wall of the shed 1 by means of a support 65. An arm 67 with an upright shaft 68 on its end is arranged on the drive shaft 66 of the electric motor 64. A pivotable drag link 69 embracing the upright shaft 68 is pivotably connected with an upright shaft 70 fitted on the U-shaped frame beam 58.

The operation of the longitudinal conveyor 8 is as follows:

When the electric motor 64 is energized, the eccentric drive 63 moves the U-shaped frame beam 58 to and fro along the rail 59 in the direction of the arrows 71 and 72 in Figure 8. When the U-shaped frame beam 58 is moved in the direction of the arrow 71, the carriers 61 will bear on the U-shaped frame beam 58 through the stops 62, and any manure and/or other dirt present in front of the carriers 61 is removed in the direction of the arrow 71. When the direction of motion by the U-shaped frame beam 58 is reversed and is in the direction of the arrow 72, the friction between the bottom of the manure channel 7 and the carriers 61 will cause the carriers 61 to rotate on the shaft 60 until the instant that they come to bear on the U-shaped frame beam 58. It will be obvious that the carriers 61 do not displace any manure when the U-shaped frame beam 58 moves in the direction of the arrow 72 in Figure 8. Because the U-shaped frame beam 58 is then moved again in the direction of the arrow 71, the carriers 61 rotate and come again to bear on the U-shaped frame beam 58 through the stops 62, whereupon manure or other dirt is again pushed up in the direction of the arrow 71. In this way, the manure and/or dirt is stepwise driven up in one direction, towards the end of the manure channel 7, where it is caught in a receptacle 9 for subsequent transportation, for instance, to a manure storage space outside the shed.

The invention is not limited to what has been described hereinbefore, but it also extends to what is reflected in the drawings.

## Claims

1. A construction for automatically milking animals, such as cows, provided with a shed (1) or any other space where the animals are allowed to move about freely, which shed (1) comprises a number of compartments designed as resting boxes (6) and which construction is furthermore provided with a milking robot (14) and a positioning construction (40), characterized in that the milking robot (14) and the positioning construction (40) are transportably arranged within the shed (1) in such a manner that an animal can be milked on the spot in or near a compartment designed as a resting box (6) where said animal is staying, while said positioning construction (40) obstructs rearward and sideward movements of the animal.

2. A construction according to claim 1, characterized in that it comprises a computer and process control system, through which the milking robot (14) is automatically moved to an animal to be milked.

3. A construction according to claim 1 or 2, characterized in that it comprises a computer system, through which the milking robot (14) is capable of moving automatically to an animal which, compared to other animals, has not been milked for a longer period of time than the period in which other animals have been milked.

4. A construction according to claim 4, characterized in that the computer system decides which cow is to be milked.

5. A construction according to any one of the preceding claims, characterized in that it comprises a transmitter (46) and receiver suitable for detecting the presence of a cow in a resting box (6).

6. A construction according to claim 5, characterized in that the transmitter (46) is mounted on a collar for attachment to an animal.

7. A construction according to any one of the preceding claims, characterized in that the resting boxes (6) are suitable to serve as milking parlours.

8. A construction according to claim 7, characterized in that the resting box (6) is provided with means (5) suitable for the supply of feed to the animal.

9. A construction according to claim 8, characterized in that said means comprise a feed through (5) disposed to the floor.

10. A construction according to any one of the preceding claims, characterized in that it comprises a concentrates dispensing system (18), through which the animals can be individually given concentrates, while there are also provided signalling means which serve to draw the attention of an animal to the supply of concentrates.

11. A construction according to claim 10, characterized in that the concentrates dispensing system (18) comprises a feed trough (19).

12. A construction according to any one of the preceding claims, characterized in that it comprises a detection device suitable for deciding whether the animal is standing or lying.

13. A construction according to any one of the preceding claims, characterized in that it comprises a device suitable for stimulating automatically the animal to be milked to get up.

14. A construction according to any one of the preceding claims, characterized in that the positioning construction (40) is pivotable in a vertical plane.

15. A construction according to any one of the preceding claims, characterized in that the positioning construction (40) comprises a tripod limiting device (43, 44).

16. A construction according to any one of the preceding claims, characterized in that the computer system controls the milking robot (14) such that the construction is capable of milking e.g. five animals disposed side by side as well as five animals disposed at random distances from each other.

17. A construction according to any one of the preceding claims, characterized in that the milking robot (14) is transportably arranged within a herd and is capable of automatically milking an animal at the option of the computer system.

18. A construction according to any one of the preceding claims, characterized in that the milking robot (14) is movable along a robot line (13) provided in the shed (1).

19. A construction according to claim 18, characterized in that the robot line (13) comprises a beam (15) mounted above and near the front of the resting boxes (6).

20. A construction according to any one of claims 17 to 19, characterized in that the robot arm (30) is attached to the beam (15) in such a way that, with respect to the beam (15), it is movable both in a horizontal plane and in a vertical plane.

21. A construction according to claim 20, characterized in that the robot arm (30) comprises a robot head (31) equipped with teat cups (32) and also comprises a sensor (33) which enables to determine the positions of the teats of an animal to be milked.

22. A construction according to any one of the preceding claims, characterized in that the resting box (6) comprises tubular side walls (25, 27) and also a tubular front wall (20) which is placed near a feed trough (19).

23. A construction according to claim 21, characterized in that the milking robot (14) comprises a first quadrangular hinge mechanism (34) which enables the robot head (31) to be moved in a horizontal plane, and a second quadrangular hinge mechanism (37) which enables the robot head (31) to be moved in a vertical plane.

24. A construction according to any one of the preceding claims, characterized in that the resting box (6) comprises a first space in which an animal is allowed to take its place, and a second space (29) which is inaccessible to the animal, with the milking robot (14) being movable in a vertical plane along the latter space.

25. A construction according to claim 24, characterized in that the second space (29) is bounded by one side wall (25) of the resting box (6) and a further partition (27) wall which at least partly extends in the longitudinal direction of the resting box (6).

26. A construction according to any one of the preceding claims, characterized in that in the longitudinal direction of the shed (1) two rows of resting boxes (6) are provided, with these rows being at a certain distance from each other and having a feeding passage (4) in between them.

27. A construction according to claim 26, characterized in that the two rows of resting boxes (6) are approachable by at least one milking robot (14).

28. A construction according to any one of the preceding claims, characterized in that at least one milking robot (14) is available for each row of resting boxes (6).

29. A construction according to any one of the preceding claims, characterized in that it comprises a manure channel (7) for manure removal.

30. A construction according to claim 29, characterized in that the manure channel (7) for manure removal is provided near the rear side of the resting boxes (6).

31. A construction according to any one of the preceding claims, characterized in that on the floor of the shed (1) there is provided a cross conveyor (11) which serves to carry off the manure to the manure channel (7).

32. A construction according to any one of the preceding claims, characterized in that in the manure channel (7) there is provided a longitudinal conveyor (8) which carries off the manure in one direction.

33. A construction according to any one of the preceding claims, characterized in that the moving parts of the construction are controlled by pneumatic or electric drives.

34. A construction according to any one of the preceding claims, characterized in that every resting box (6) is provided with a concentrates dispensing system (18) including a feed trough (19) movable in height and pivotable on a virtually vertical shaft.

## Patentansprüche

1. Vorrichtung zum automatischen Melken von Tieren, wie z. B. Kühen, mit einem Stall (1) oder einem anderen Raum, in dem sich die Tiere frei bewegen können, wobei der Stall (1) eine Anzahl von als Ruheboxen (6) ausgebildeten Kammern aufweist und die Vorrichtung ferner mit einem Melkroboter (14) und einer Positioniervorrichtung (40) versehen ist,
dadurch gekennzeichnet, daß der Melkroboter (14) und die Positioniervorrichtung (40) innerhalb des Stalles (1) transportabel angeordnet sind, derart, daß ein Tier vor Ort in oder nahe einer als Ruhebox (6) ausgebildeten Kammer, in der sich das Tier aufhält, gemolken werden kann, wobei die Positioniervorrichtung (40) Bewegungen des Tieres nach hinten und zur Seite verhindert.

2. Vorrichtung nach Anspruch 1,
dadurch gekennzeichnet, daß die Vorrichtung ein Computer- und Programmsteuerungssystem aufweist, von dem der Melkroboter (14) automatisch zu einem zu melkenden Tier bewegt wird.

3. Vorrichtung nach Anspruch 1 oder 2,
dadurch gekennzeichnet, daß die Vorrichtung ein Computersystem aufweist, mittels dessen der Melkroboter (14) automatisch zu einem Tier zu bewegen ist, das verglichen mit anderen Tieren während eines Zeitraumes nicht gemolken wurde, der länger ist als der Zeitraum, in dem andere Tiere gemolken wurden.

4. Vorrichtung nach Anspruch 4,
dadurch gekennzeichnet, daß das Computersystem entscheidet, welche Kuh zu melken ist.

5. Vorrichtung nach einem der vorhergehenden Ansprüche,
dadurch gekennzeichnet, daß die Vorrichtung einen Sender (46) und einen Empfänger aufweist, um die Anwesenheit einer Kuh in einer Ruhebox (6) zu ermitteln.

6. Vorrichtung nach Anspruch 5,
dadurch gekennzeichnet, daß der Sender (46) an einem Halsband zur Anbringung an einem Tier befestigt ist.

7. Vorrichtung nach einem der vorhergehenden Ansprüche,
dadurch gekennzeichnet, daß die Ruheboxen (6) geeignet sind, als Melkstände zu dienen.

8. Vorrichtung nach Anspruch 7,
dadurch gekennzeichnet, daß die Ruhebox (6) eine Vorrichtung (5) zur Versorgung des Tieres mit Futter aufweist.

9. Vorrichtung nach Anspruch 8,
dadurch gekennzeichnet, daß die Fütterungsvorrichtung einen auf dem Boden angeordneten Futtertrog (5) aufweist.

10. Vorrichtung nach einem der vorhergehenden Ansprüche,
dadurch gekennzeichnet, daß die Vorrichtung eine Fütterungsvorrichtung (18) für Kraftfutter aufweist, über die die Tiere einzeln mit Kraftfutter zu versorgen sind, wobei außerdem eine Anzeigevorrichtung vorhanden ist, die dazu dient, ein Tier auf die Zufuhr von Kraftfutter aufmerksam zu machen.

11. Vorrichtung nach Anspruch 10,
dadurch gekennzeichnet, daß die Fütterungsvorrichtung (18) für Kraftfutter einen Futtertrog (19) aufweist.

12. Vorrichtung nach einem der vorhergehenden Ansprüche,
dadurch gekennzeichnet, daß die Vorrichtung eine Detektionseinrichtung aufweist, mittels der festzustellen ist, ob das Tier steht oder liegt.

13. Vorrichtung nach einem der vorhergehenden Ansprüche,
gekennzeichnet durch eine Vorrichtung, mittels der das zu melkende Tier automatisch zum Aufstehen zu bewegen ist.

14. Vorrichtung nach einem der vorhergehenden Ansprüche,
dadurch gekennzeichnet, daß die Positioniervorrichtung (40) in einer vertikalen Ebene schwenkbar ist.

15. Vorrichtung nach einem der vorhergehenden Ansprüche,
dadurch gekennzeichnet, daß die Positioniervorrichtung (40) eine dreiarmige Begrenzungsvorrichtung (43, 44) aufweist.

16. Vorrichtung nach einem der vorhergehenden Ansprüche,
dadurch gekennzeichnet, daß das Computersystem den Melkroboter (14) derart steuert, daß von der Vorrichtung beispielsweise fünf Tiere zu melken sind, die nebeneinander stehen, sowie fünf Tiere, die beliebige Abstände zueinander aufweisen.

17. Vorrichtung nach einem der vorhergehenden Ansprüche,
dadurch gekennzeichnet, daß der Melkroboter (14) in einer Herde transportabel angeordnet und geeignet ist, ein vom Computersystem ausgewähltes Tier automatisch zu melken.

18. Vorrichtung nach einem der vorhergehenden Ansprüche,
dadurch gekennzeichnet, daß der Melkroboter (14) entlang einer in dem Stall (1) angeordneten Roboterführung (13) verschiebbar ist.

19. Vorrichtung nach Anspruch 18,
dadurch gekennzeichnet, daß die Roboterführung (13) einen Balken (15) aufweist, der über und nahe der Vorderseite der Ruheboxen (6) angeordnet ist.

20. Vorrichtung nach einem der Ansprüche 17 bis 19,
dadurch gekennzeichnet, daß der Roboterarm (30) an dem Balken (15) derart angeordnet ist, daß er in bezug auf den Balken (15) sowohl in einer horizontalen als auch in einer vertikalen Ebene bewegbar ist.

21. Vorrichtung nach Anspruch 20,
dadurch gekennzeichnet, daß der Roboterarm (30) einen mit Zitzenbechern (32) versehenen Roboterkopf (31) und ferner einen Sensor (33) aufweist, mittels dessen die Positionen der Zitzen eines zu melkenden Tieres zu ermitteln sind.

22. Vorrichtung nach einem der vorhergehenden Ansprüche,
dadurch gekennzeichnet, daß die Ruhebox (6) rohrförmige Seitenwände (25, 27) und auch eine rohrförmige Vorderwand (20) aufweist, die nahe einem Futtertrog (19) angeordnet ist.

23. Vorrichtung nach Anspruch 21,
dadurch gekennzeichnet, daß der Melkroboter (14) eine erste Viergelenk-Schwenkvorrichtung (34) aufweist, mittels der der Roboterkopf (31) in einer horizontalen Ebene bewegbar ist, und eine zweite Viergelenk-Schwenkvorrichtung (37), mittels der der Roboterkopf (31) in einer vertikalen Ebene bewegbar ist.

24. Vorrichtung nach einem der vorhergehenden Ansprüche,
dadurch gekennzeichnet, daß die Ruhebox (6) einen ersten Raum aufweist, in dem ein Tier seinen Platz einnehmen kann, und einen zweiten Raum (29), der für das Tier nicht zugänglich ist, wobei der Melkroboter (14) in letzterem Raum in einer vertikalen Ebene bewegbar ist.

25. Vorrichtung nach Anspruch 24,
dadurch gekennzeichnet, daß der zweite Raum (29) durch eine Seitenwand (25) der Ruhebox (6) und eine weitere Trennwand (27) begrenzt ist, die sich zumindest teilweise in Längsrichtung der Ruhebox (6) erstreckt.

26. Vorrichtung nach einem der vorhergehenden Ansprüche,
dadurch gekennzeichnet, daß in Längsrichtung des Stalles (1) zwei Reihen von Ruheboxen (6) vorgesehen sind, wobei diese Reihen einen bestimmten Abstand zueinander aufweisen und zwischen den Reihen ein Fütterungsgang (4) angeordnet ist.

27. Vorrichtung nach Anspruch 26,
dadurch gekennzeichnet, daß die beiden Reihen von Ruheboxen (6) von mindestens einem Melkroboter (14) ansteuerbar sind.

28. Vorrichtung nach einem der vorhergehenden Ansprüche,
dadurch gekennzeichnet, daß für jede Reihe von Ruheboxen (6) mindestens ein Melkroboter (14) zur Verfügung steht.

29. Vorrichtung nach einem der vorhergehenden Ansprüche,
dadurch gekennzeichnet, daß die Vorrichtung eine Dungrinne (7) zum Abführen von Dung aufweist.

30. Vorrichtung nach Anspruch 29,
dadurch gekennzeichnet, daß die Dungrinne (7) zum Abführen von Dung nahe der Rückseite der Ruheboxen (6) angeordnet ist.

31. Vorrichtung nach einem der vorhergehenden Ansprüche,
dadurch gekennzeichnet, daß auf dem Boden des Stalles (1) ein Querförderer (11) angeordnet ist, der dazu dient, den Dung in die Dungrinne (7) abzuführen.

32. Vorrichtung nach einem der vorhergehenden Ansprüche,
dadurch gekennzeichnet, daß in der Dungrinne (7) ein Längsförderer (8) angeordnet ist, der den Dung in einer Richtung abführt.

33. Vorrichtung nach einem der vorhergehenden Ansprüche,
dadurch gekennzeichnet, daß die sich bewegenden Teile der Vorrichtung von pneumatischen oder elektrischen Antrieben gesteuert sind.

34. Vorrichtung nach einem der vorhergehenden Ansprüche,
dadurch gekennzeichnet, daß jede Ruhebox (6) eine Fütterungsvorrichtung (18) für Kraftfutter mit einem Futtertrog (19) aufweist, der höhenbewegbar und um eine praktisch vertikale Achse schwenkbar ist.

## Revendications

1. Installation de traire automatiquement des animaux, tels que des vaches, comportant une étable (1) ou tout autre espace où les animaux peuvent se déplacer librement, laquelle étable (1) comporte plusieurs compartiments conçus en tant que box de repos (6) et laquelle installation est en outre pourvue d'un robot de traite (14) et d'un système de positionnement (40), caractérisée en ce que le robot de traite (14) et le système de positionnement (40) sont agencés de manière transportable dans l'étable (1) de manière telle qu'un animal peut être trait à l'emplacement situé dans un compartiment conçu en tant que box de repos (6) ou à proximité de celui-ci lorsque ledit animal s'y trouve, alors que ledit système de positionnement (40) empêche des déplacements vers l'arrière et latéraux de l'animal.

2. Installation selon la revendication 1, caractérisée en ce qu'elle comporte un ordinateur et un système de commande de processus, par l'intermédiaire desquels le robot de traite (14) est déplacé automatiquement vers un animal à traire.

3. Installation selon la revendication 1 ou 2, caractérisée en ce qu'elle comporte un ordinateur, par l'intermédiaire duquel le robot de traite (14) peut se déplacer automatiquement vers un animal qui, comparé aux autres animaux, n'a pas été traité depuis une période de temps plus longue que la période pendant laquelle d'autres animaux ont été traits.

4. Installation selon la revendication 3, caractérisée en ce que l'ordinateur décide quelle vache doit être traite.

5. Installation selon l'une quelconque des revendications précédentes, caractérisée en ce qu'elle comporte un émetteur (46) et un récepteur adaptés pour détecter la présence d'une vache dans un box de repos (6).

6. Installation selon la revendication 5, caractérisée en ce que l'émetteur (46) est monté sur un collier destiné à être fixé sur un animal.

7. Installation selon l'une quelconque des revendications précédentes, caractérisée en ce que les box de repos (6) sont adaptés pour servir en tant qu'équipement de traite.

8. Installation selon la revendication 7, caractérisée en ce que le box de repos (6) est muni de moyens (5) adaptés pour l'alimentation d'aliments vers l'animal.

9. Installation selon la revendication 8, caractérisée en ce que lesdits moyens comportent une goulotte d'alimentation (5) disposée sur le sol.

10. Installation selon l'une quelconque des revendications précédentes, caractérisée en ce qu'elle comporte un système de distribution de concentrés (18), par l'intermédiaire duquel les animaux peuvent recevoir individuellement des concentrés, alors qu'ils sont aussi munis de moyens d'avertissement qui servent à attirer l'attention d'un animal vers l'alimentation en concentrés.

11. Installation selon la revendication 10, caractérisée en ce que le système de distribution de concentrés (18) comporte une goulotte d'alimentation (19).

12. Installation selon l'une quelconque des revendications précédentes, caractérisée en ce qu'elle comporte un dispositif de détection adapté pour décider si l'animal est debout ou couché.

13. Installation selon l'une quelconque des revendications précédentes, caractérisée en ce qu'elle comporte un dispositif adapté pour stimuler automatiquement l'animal à traire pour qu'il se lève.

14. Installation selon l'une quelconque des revendications précédentes, caractérisée en ce que le système de positionnement (40) peut pivoter dans un plan vertical.

15. Installation selon l'une quelconque des revendications précédentes, caractérisée en ce que le système de positionnement (40) comporte un dispositif de retenue à trois branches (43, 44).

16. Installation selon l'une quelconque des revendications précédentes, caractérisée en ce que l'ordinateur commande le robot de traite (14) de telle sorte que l'installation peut traire par exemple cinq animaux disposés côte à côte ainsi que cinq animaux disposés à des distances aléatoires les uns des autres.

17. Installation selon l'une quelconque des revendications précédentes, caractérisée en ce que le robot de traite (14) est agencé de manière transportable dans un troupeau et est capable de traire automatiquement un animal selon l'option de l'ordinateur.

18. Installation selon l'une quelconque des revendications précédentes, caractérisée en ce que le robot de traite (14) est mobile le long d'une ligne pour robot (13) agencée dans l'étable (1).

19. Installation selon la revendication 18, caractérisée en ce que la ligne pour robot (13) comporte une poutre (15) montée au-dessus et à proximité de l'avant des box de repos (6).

20. Installation selon l'une quelconque des revendications 17 à 19, caractérisée en ce que le bras de robot (30) est relié à la poutre (15) de manière telle que, par rapport à la poutre (15), il est mobile à la fois dans un plan horizontal et dans un plan vertical.

21. Installation selon la revendication 20, caractérisée en ce que le bras de robot (30) comporte une tête de robot (31) munie de gobelets trayeurs (32) et comporte aussi un détecteur (33) qui permet de déterminer les positions des trayons d'un animal à traire.

22. Installation selon l'une quelconque des revendications précédentes, caractérisée en ce que le box de repos (6) est constitué de parois latérales tubulaires (25, 27) et aussi d'une paroi avant tubulaire (20) qui est placée à proximité d'une goulotte d'alimentation (19).

23. Installation selon la revendication 21, caractérisée en ce que le robot de traite (14) comporte un premier mécanisme articulé rectangulaire (34) qui permet à la tête de robot (31) d'être déplacée dans un plan horizontal, et un second mécanisme articulé rectangulaire (37) qui permet à la tête de robot (31) d'être déplacée dans un plan vertical.

24. Installation selon l'une quelconque des revendications précédentes, caractérisée en ce que le box de repos (6) comporte un premier espace dans lequel un animal peut prendre sa place, et un second espace (29) qui est inaccessible à l'animal, le robot de traite (14) étant mobile dans un plan vertical le long de ce dernier espace.

25. Installation selon la revendication 24, caractérisée en ce que le second espace (29) est délimité par une paroi latérale (25) du box de repos (6) et une autre paroi de séparation (27) qui, au moins partiellement, s'étend dans la direction longitudinale du box de repos (6).

26. Installation selon l'une quelconque des revendications précédentes, caractérisée en ce que dans la direction longitudinale de l'étable (1) sont agencées deux rangées de box de repos (6), ces rangées étant à une certaine distance l'une de l'autre et ayant un passage d'alimentation (4) situé entre elles.

27. Installation selon la revendication 26, caractérisée en ce que les deux rangées de box de repos (6) peuvent être approchées par au moins un robot de traite (14).

28. Installation selon l'une quelconque des revendications précédentes, caractérisée en ce qu'au moins un robot de traite (14) est disponible pour chaque rangée de box de repos (6).

29. Installation selon l'une quelconque des revendications précédentes, caractérisée en ce qu'elle comporte un canal pour fumier (7) destiné à l'enlèvement du fumier.

30. Installation selon la revendication 29, caractérisée en ce que le canal pour fumier (7) destiné à l'enlèvement du fumier est agencé à proximité du côté arrière des box de repos (6).

31. Installation selon l'une quelconque des revendications précédentes, caractérisée en ce que sur le sol de l'étable (1) est agencé un convoyeur transversal (11) qui sert à enlever le fumier vers le canal pour fumier (7).

32. Installation selon l'une quelconque des revendications précédentes, caractérisée en ce que dans le canal pour fumier (7) est agencé un convoyeur longitudinal (8) qui transporte le fumier dans une direction.

33. Installation selon l'une quelconque des revendications précédentes, caractérisée en ce que les parties mobiles de l'installation sont commandées par des entraînements pneumatiques ou électriques.

34. Installation selon l'une quelconque des revendications précédentes, caractérisée en ce que chaque box de repos (6) est muni d'un système de distribution de concentrés (18) comportant une goulotte d'alimentation (19) mobile en hauteur et pouvant pivoter sur un arbre virtuellement vertical.
